# FASCICULE DE BREVET EUROPEEN

(11) **EP 3 159 965 B1**
(45) Date de publication et mention de la délivrance du brevet: **27.06.2018**
(21) Numéro de dépôt: 16194678.5
(22) Date de dépôt: 19.10.2016
(51) Int. Cl.: H04B 7/02, H01Q 3/26, G01S 13/44, G01S 13/02, H01Q 15/02, H01Q 3/46

(54) **ANTENNE À RÉSEAU TRANSMETTEUR POUR SYSTÈME RADAR MONO-IMPULSION**
ANTENNENNETZSENDER FÜR EIN MONOIMPULSRADARSYSTEM
ANTENNA WITH TRANSMITTING NETWORK FOR MONOPULSE RADAR SYSTEM

(30) Priorité: 23.10.2015 FR 1560157
(43) Date de publication de la demande: 26.04.2017
(73) Titulaire: COMMISSARIAT À L'ÉNERGIE ATOMIQUE ET AUX ÉNERGIES ALTERNATIVES, 75015 Paris (FR)
(72) Inventeur: DI PALMA, Luca, 38000 GRENOBLE (FR); CLEMENTE, Antonio, 38180 SEYSSINS (FR); DUSSOPT, Laurent, 38100 GRENOBLE (FR)
(74) Mandataire: Cabinet Beaumont

(56) Documents cités:
- FR-A- 1 244 969
- CLEMENTE ANTONIO ET AL: "Wideband 400-Element Electronically Reconfigurable Transmitarray in X Band", IEEE TRANSACTIONS ON ANTENNAS AND PROPAGATION, IEEE SERVICE CENTER, PISCATAWAY, NJ, US, vol. 61, no. 10, 1 octobre 2013 (2013-10-01), pages 5017-5027, XP011528835, ISSN: 0018-926X, DOI: 10.1109/TAP.2013.2271493 [extrait le 2013-10-03]

## Description

### Domaine

La présente demande concerne le domaine des antennes radio à réseau transmetteur ("transmit-array antenna" en lanque anglaise), et vise plus particulièrement une antenne à réseau transmetteur adaptée à un système radar mono-impulsion.

### Exposé de l'art antérieur

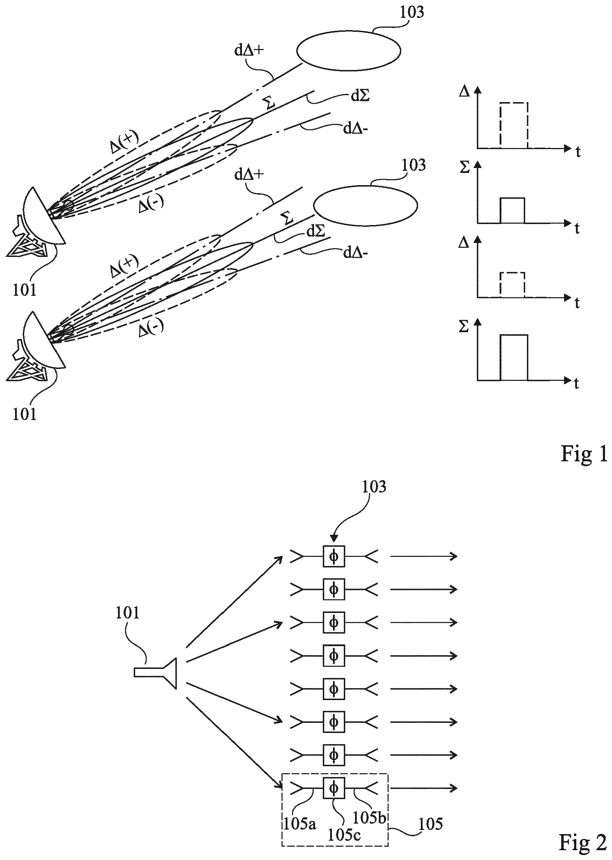

La figure 1 illustre de façon schématique le principe de fonctionnement d'un système radar mono-impulsion. Un tel système comporte classiquement une antenne 101 adaptée à émettre et recevoir des ondes radio, par exemple des ondes à une fréquence comprise entre 1 et 100 GHz. Plus particulièrement, l'antenne 101 est adaptée à générer deux faisceaux distincts :
- un premier faisceau Σ, généralement appelé faisceau somme, dont la majeure partie de la puissance est concentrée dans un lobe principal unique centré selon une première direction dΣ ; et
- un deuxième faisceau Δ, généralement appelé faisceau différence, dont la majeure partie de la puissance est répartie dans deux lobes principaux distincts Δ(+) et Δ(-), centrés respectivement selon des deuxième et troisième directions dΔ+ et dΔ-, les directions dΔ+, dΔ- et dΣ étant coplanaires, les directions dΔ+ et dΔ- étant sensiblement symétriques par rapport à la direction dΣ, et le deuxième faisceau Δ ayant une puissance nulle ou peu significative (par exemple au moins 100 fois plus faible que celle du faisceau Σ) dans la direction dΣ.

Lors d'une phase d'émission, l'antenne 101 est configurée pour émettre uniquement le faisceau somme Σ, sous la forme d'une impulsion unique. Lors d'une phase de réception postérieure à la phase d'émission, l'antenne 101 est configurée pour recevoir simultanément le faisceau somme Σ et le faisceau différence Δ, et pour fournir des signaux représentatifs de ces deux faisceaux sur deux voies ou bornes de sortie distinctes. Lorsqu'un objet cible 103 se trouve sur le trajet de l'impulsion émise par l'antenne 101, un écho est renvoyé en direction de l'antenne 101. Si l'objet 103 se situe sur la direction centrale dΣ de l'antenne ou proche de la direction centrale dΣ, ce qui correspond à la situation représentée en partie inférieure de la figure 1, la part du signal d'écho captée dans le faisceau somme Σ est prépondérante devant la part du signal d'écho captée dans le faisceau différence Δ. Si en revanche l'objet 103 se situe sur l'une des directions dΔ+ et dΔ- du faisceau différence ou proche de l'une des directions dΔ+ et dΔ- du faisceau différence, ce qui correspond à la situation représentée en partie supérieure de la figure 1, la part du signal d'écho captée dans le faisceau différence Δ est prépondérante devant la part du signal d'écho captée dans le faisceau somme Σ. Ainsi, la comparaison des signaux de sortie de l'antenne 101 associés aux deux faisceaux Σ et Δ permet d'obtenir une information représentative de l'erreur d'alignement entre la direction centrale d'émission dΣ ou direction de pointage de l'antenne et la position de l'objet 103. L'erreur d'alignement de l'antenne est alors corrigée, puis une nouvelle impulsion du faisceau somme Σ est émise. Un suivi automatique de la position de l'objet 103 dans le plan comportant les directions dΔ+, dΔ- et dΣ peut ainsi être réalisé. Pour réaliser un suivi de la position d'un objet dans les trois dimensions de l'espace, l'antenne 101 peut en outre être adaptée pour, lors de la phase de réception, générer, simultanément aux premier et deuxième faisceaux Σ et Δ, un troisième faisceau Δ' (non visible sur la figure 1), aussi appelé faisceau différence, dont la majeure partie de la puissance est répartie dans deux lobes principaux distincts Δ'(+) et Δ'(-), centrés respectivement selon des quatrième et cinquième directions dΔ'+ et dΔ'-, les directions dΔ'+, dΔ'- et dΣ étant coplanaires, les directions dΔ'+ et dΔ'- étant sensiblement symétriques par rapport à la direction dΣ, le troisième faisceau Δ' ayant une puissance nulle ou peu significative (par exemple au moins 100 fois plus faible que celle du faisceau Σ) dans la direction dΣ, et le plan comportant les directions dΔ'+, dΔ'- et dΣ étant sensiblement orthogonal au plan comportant les directions dΔ+, dΔ- et dΣ.

Un avantage des systèmes radar mono-impulsion est que l'écho d'une seule impulsion émise par l'antenne 101 permet d'obtenir une information représentative de l'erreur d'alignement entre la direction de pointage dΣ de l'antenne et la position de l'objet cible 103. Ceci permet de réaliser un suivi de la position de l'objet cible plus précis et plus rapide que dans les systèmes radar dits à commutation séquentielle de faisceau, dans lesquels des impulsions d'un faisceau mono-lobe sont émises successivement dans plusieurs directions situées de part et d'autre d'un axe central ou axe de pointage de l'antenne, l'erreur d'alignement entre l'axe de pointage de l'antenne et l'objet cible étant déterminée en comparant les échos des différentes impulsions.

De nombreuses implémentations de systèmes radar mono-impulsion ont été proposées, dans lesquelles la génération simultanée des faisceaux somme Σ et différence Δ, Δ' est réalisée par un élément d'antenne ayant un diagramme de rayonnement fixe, un système mécanique motorisé étant utilisé pour contrôler la direction de pointage de l'antenne de façon à permettre de réaliser le suivi de l'objet cible.

Pour améliorer les performances de détection et de suivi de position, et réduire la complexité mécanique du système, il serait toutefois souhaitable de pouvoir disposer d'une antenne adaptée à un système radar mono-impulsion, c'est-à-dire capable de générer simultanément les faisceaux somme Σ et différence Δ, Δ', cette antenne étant commandable électroniquement pour modifier la direction de pointage de l'antenne sans élément mécanique motorisé.

Parmi les antennes commandables électroniquement pour modifier la direction de pointage d'un faisceau généré par l'antenne, on trouve les antennes à réseau transmetteur reconfigurable.

La figure 2 est une vue de côté schématique d'une antenne à réseau transmetteur. Une telle antenne comprend typiquement une ou plusieurs sources primaires 101 (une unique source dans l'exemple représenté) irradiant un réseau transmetteur 103. Le réseau 103 comprend une pluralité de cellules élémentaires 105, par exemple disposées en matrice selon des lignes et des colonnes. Chaque cellule 105 comprend deux faces antennes opposées 105a et 105b et est apte à recevoir un rayonnement électromagnétique sur l'une ou l'autre de ses faces 105a et 105b et à réémettre ce rayonnement depuis sa face opposée 105b ou 105a avec un déphasage φ connu. Pour cela, les faces 105a et 105b de la cellule sont séparées par un dispositif de déphasage 105c. Les caractéristiques du faisceau produit par l'antenne, et notamment sa forme et sa direction centrale (ou direction de pointage), dépendent des valeurs des déphasages introduits par les différentes cellules. Le réseau transmetteur est dit reconfigurable lorsque les cellules élémentaires 105 sont commandables électroniquement de façon individuelle pour modifier leur valeur de déphasage φ, ce qui permet de modifier dynamiquement les caractéristiques du faisceau généré par l'antenne, et notamment de modifier la direction de pointage de l'antenne sans déplacer mécaniquement l'antenne ou une partie de l'antenne au moyen d'un élément motorisé.

Les antennes à réseau transmetteur reconfigurable ont notamment pour avantages d'avoir une bonne efficacité énergétique, et d'être relativement simples, peu onéreuses, et peu encombrantes, notamment grâce au fait que les réseaux transmetteurs sont réalisables en technologie planaire, généralement sur circuit imprimé.

Un exemple de réalisation d'une antenne à réseau transmetteur reconfigurable a été décrit dans l'article intitulé "Wideband 400-Element Electronically Reconfigurable Transmitarray in X Band" de Antonio Clemente et al. (IEEE Trans. on Antennas and Propagation, vol. 61, no. 10, pp. 5017-5027, Oct. 2013).

L'article intitulé "Radiation Pattern Synthesis for Monopulse Radar Applications using a Reconfigurable Transmitarray in X-Band" de Luca Di Palma et al. (EuCAP 2015, Apr 2015, Lisbonne, Portugal) montre que des faisceaux (ou diagrammes de rayonnement) somme et différence du type utilisé dans les systèmes radar mono-impulsion peuvent être générés au moyen d'une antenne à réseau transmetteur reconfigurable. Cet article reste toutefois théorique car il ne décrit pas comment générer simultanément les faisceaux somme et différence au moyen d'une antenne à réseau transmetteur, ce qui est une condition nécessaire pour la mise en oeuvre d'un système radar mono-impulsion.

Le brevet d'invention FR 1 244 969 A décrit une antenne comportant :
- des premier, deuxième, troisième et quatrième quadrants consécutifs qui sont 4 éléments primaires de l'antenne et sont des sources qui reçoivent des signaux a, b, c et d; et
- un circuit de traitement adapté à fournir un premier signal représentatif de la somme des signaux fournis respectivement par les première, deuxième, troisième et quatrième sources,
- un deuxième signal de sortie représentatif de la différence (a+b)-(c+d) = a+b-c-d, et un troisième signal de sortie représentatif de la différence (a+d)-(b+c)=a-b-c+d.

Un objet d'un mode de réalisation est de proposer une antenne à réseau transmetteur reconfigurable adaptée à un système radar mono-impulsion.

### Résumé

Ainsi, un mode de réalisation prévoit une antenne comportant : un réseau de cellules élémentaires commandables individuellement, chaque cellule étant adaptée à transmettre un signal radio en introduisant dans ce signal un déphasage contrôlable choisi parmi au moins deux valeurs discrètes de déphasage ; du côté d'une première face du réseau, des première, deuxième, troisième et quatrième sources primaires adaptées à irradier respectivement des premier, deuxième, troisième et quatrième quadrants consécutifs du réseau ; et un circuit de traitement adapté à fournir un premier signal représentatif de la somme des signaux S1, S2, S3, et S4 fournis respectivement par les première, deuxième, troisième et quatrième sources, un deuxième signal de sortie représentatif de la différence S1+S2-S3-S4, et un troisième signal de sortie représentatif de la différence S1-S2-S3+S4.

Selon un mode de réalisation, les cellules élémentaires du réseau sont disposées en matrice selon des rangées et des colonnes.

Selon un mode de réalisation, la matrice de cellules élémentaires du réseau est une matrice carrée.

Selon un mode de réalisation, le réseau comprend 100 à 10000 cellules élémentaires.

Selon un mode de réalisation, chacune des première, deuxième, troisième et quatrième sources primaires comprend une antenne cornet.

Selon un mode de réalisation, chacune des cellules élémentaires est une cellule 1-bit adaptée à introduire un déphasage de 0 ou 180° dans le signal transmis.

Selon un mode de réalisation, le circuit de traitement comprend des premier, deuxième, troisième et quatrième coupleurs hybrides à 180°, chaque coupleur comportant des première, deuxième, troisième et quatrième voies d'entrée/sortie.

Selon un mode de réalisation : le premier coupleur a ses deuxième et troisième voies connectées respectivement aux deuxième et première sources, et le deuxième coupleur a ses deuxième et troisième voies connectées respectivement aux troisième et quatrième sources ; le troisième coupleur a ses deuxième et troisième voies connectées respectivement à la première voie du premier coupleur et à la première voie du deuxième coupleur ; le quatrième coupleur a ses deuxième et troisième voies connectées respectivement à la quatrième voie du premier coupleur et à la quatrième voie du deuxième coupleur ; et la première voie du troisième coupleur est connectée à une voie de fourniture du premier signal de sortie, la quatrième voie du troisième coupleur est connectée à une voie de fourniture du troisième signal de sortie, et la première voie du quatrième coupleur est connectée à une voie de fourniture du deuxième signal de sortie.

Selon un mode de réalisation, chacun des premier, deuxième, troisième et quatrième coupleurs est adapté : à diviser un signal entrant sur sa première voie en deux signaux d'intensités sensiblement égales transmis, sans changement de phase, vers ses deuxième et troisième voies ; à additionner des signaux reçus sur ses deuxième et troisième voies et à transmettre le signal résultant sur sa première voie ; et à soustraire des signaux reçus sur ses deuxième et troisième voies et à transmettre le signal résultant sur sa quatrième voie.

Un autre mode de réalisation prévoit un système radar mono-impulsion comportant une antenne du type susmentionné.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, précédemment décrite, illustre schématiquement le principe de fonctionnement d'un radar mono-impulsion ;
la figure 2, précédemment décrite, est une vue de côté schématique d'une antenne à réseau transmetteur ;
les figures 3A et 3B sont respectivement une vue de côté schématique et une vue de dos (c'est-à-dire de la face arrière) schématique d'un exemple d'un mode de réalisation d'une antenne à réseau transmetteur reconfigurable adaptée à un système radar mono-impulsion ;
la figure 4 représente plus en détail un exemple de réalisation d'un circuit de traitement de l'antenne des figures 3A et 3B ; et
les figures 5A, 5B, 5C, 5D sont des diagrammes illustrant le comportement d'une antenne du type décrit en relation avec les figures 3A, 3B et 4.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, on va décrire ci-après des modes de réalisation d'une antenne à réseau transmetteur comportant un réseau transmetteur et plusieurs sources primaires agencées pour irradier ce réseau. La structure et le fonctionnement du réseau transmetteur et des cellules élémentaires constituant ce réseau, et la structure et le fonctionnement des sources primaires, ne seront pas décrits de façon détaillée, les modes de réalisation décrits étant compatibles avec toutes ou la plupart des structures connues de réseaux transmetteurs et de sources primaires d'irradiation.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures, étant entendu que, dans la pratique, les éléments décrits peuvent être orientés différemment. Sauf précision contraire, les expressions "approximativement", "environ", "sensiblement", et "de l'ordre de" signifient à 10 % près, de préférence à 5 % près.

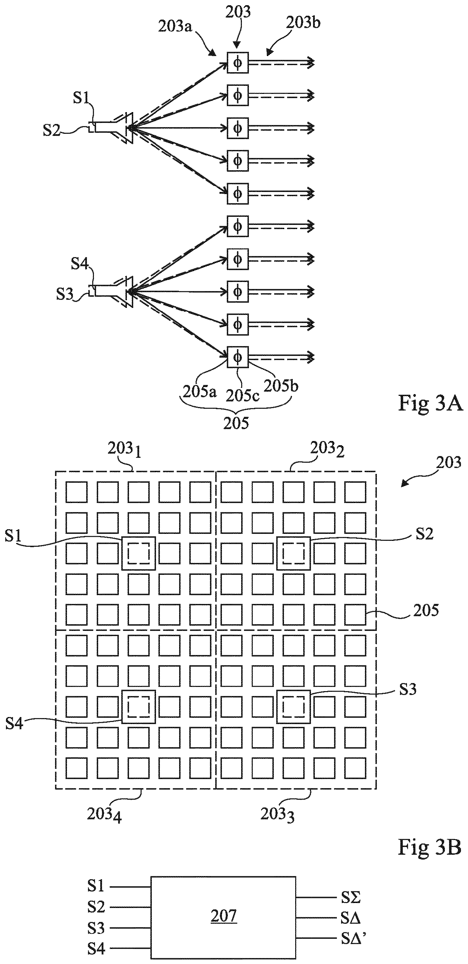

Les figures 3A et 3B sont respectivement une vue de côté et une vue de dos d'une antenne à réseau transmetteur reconfigurable adaptée à un système radar mono-impulsion.

Cette antenne comprend un réseau transmetteur reconfigurable 203 comprenant une pluralité de cellules élémentaires 205, par exemple 100 à 10000 cellules élémentaires. Dans l'exemple représenté, les cellules élémentaires 205 sont disposées selon une matrice carrée. Les modes de réalisation décrits ne se limitent toutefois pas à ce cas particulier. A titre de variante, les cellules élémentaires 205 peuvent être disposées selon une matrice rectangulaire, ou être agencées en lignes et en colonnes dans un espace de forme générale circulaire, elliptique, rectangulaire, etc., ou être réparties selon un agencement non-régulier ou non périodique dans un espace de forme générale circulaire, elliptique, rectangulaire, etc. Chaque cellule 205 comprend deux faces antennes opposées 205a et 205b et est apte à recevoir un rayonnement électromagnétique sur l'une ou l'autre de ses faces 205a et 205b et à réémettre ce rayonnement depuis sa face opposée 205b ou 205a à la même fréquence mais avec un déphasage φ connu. Pour cela, les faces 205a et 205b de la cellule sont séparées par un dispositif de déphasage 205c. Les faces 205a des différentes cellules 205 du réseau 203 sont tournées d'un premier côté du réseau, et définissent une première face 203a du réseau, et les faces 205b des différentes cellules 205 du réseau 203 sont tournées d'un deuxième côté du réseau opposé au premier côté et définissent une deuxième face 203b du réseau opposée à la première face. Les cellules élémentaires 205 sont commandables électroniquement de façon individuelle pour modifier la valeur φ du déphasage qu'elles introduisent, ce qui permet de modifier dynamiquement les caractéristiques du faisceau généré par l'antenne, et notamment de modifier sa direction de pointage sans déplacer mécaniquement l'antenne ou une partie de l'antenne au moyen d'un élément motorisé. A titre d'exemple, chaque cellule 205 peut être commandée pour prendre l'une ou l'autre des deux valeurs de déphasages φ=0° et φ=180°. On parle alors de cellule 1-bit, car le déphasage φ introduit par la cellule peut être contrôlé avec une résolution de 1-bit (déphasage de 0° ou 180°). A titre de variante, chaque cellule 205 peut être contrôlée avec une résolution supérieure à 1-bit, c'est-à-dire que la valeur du déphasage φ introduit par chaque cellule peut être choisie parmi un nombre de valeurs discrètes supérieur à 2. Les cellules élémentaires 205 du réseau 203 sont par exemple toutes identiques ou similaires. Chaque cellule élémentaire 205 a par exemple des dimensions de l'ordre de la moitié de la longueur d'onde de fonctionnement de l'antenne, la fréquence de fonctionnement de l'antenne étant par exemple comprise dans la bande allant de 1 à 100 GHz. A titre d'exemple, les cellules élémentaires 205 du réseau transmetteur 203 sont des cellules du type décrit dans l'article intitulé "1-Bit Reconfigurable Unit Cell Based on PIN Diodes for Transmit-Array Applications in X-Band", de Antonio Clemente et al. (IEEE Trans. on Antennas and Propagation vol. 60, no. 5, pp. 2260-2269, May 2012). Le réseau transmetteur 203 est par exemple un réseau du type décrit dans l'article susmentionné intitulé "Wideband 400-Element Electronically Reconfigurable Transmitarray in X Band", de Antonio Clemente et al.

L'antenne des figures 3A et 3B comprend par ailleurs quatre sources primaires d'émission/réception distinctes S1, S2, S3 et S4, adaptées à irradier respectivement quatre portions distinctes 203₁, 203₂, 203₃ et 203₄ du réseau 203. Les sources S1, S2, S3 et S4 sont disposées du côté d'une même face du réseau. Dans l'exemple représenté, les sources S1, S2, S3 et S4 sont disposées en regard de la face 203a du réseau. Chacune des portions 203₁, 203₂, 203₃ et 203₄ du réseau 203 correspond par exemple sensiblement à un quart du réseau 203. Dans l'exemple représenté, les portions 203₁, 203₂, 203₃ et 203₄ du réseau 203 correspondent respectivement, dans l'orientation de la figure 3B, à un premier quart du réseau 203, situé en haut à gauche du réseau par rapport au centre de symétrie du réseau, à un deuxième quart du réseau 203, situé en haut à droite du réseau par rapport au centre de symétrie du réseau, à un troisième quart du réseau 203, situé en bas à droite du réseau par rapport au centre de symétrie du réseau, et à un quatrième quart du réseau 203, situé en bas à gauche du réseau par rapport au centre de symétrie du réseau. En d'autres termes, les portions 203₁, 203₂, 203₃ et 203₄ du réseau 203 correspondent sensiblement à quatre quadrants consécutifs du réseau, un quadrant étant ici considéré comme étant un secteur angulaire de 90° de la face 203a du réseau, défini à partir du centre de symétrie de cette face 203a.

En pratique, le faisceau produit par chacune des sources S1, S2, S3 et S4 irradie principalement la portion 203₁, 203₂, 203₃ ou 203₄ de réseau à laquelle elle est associée, mais peut déborder légèrement sur les portions de réseau voisines. Chacune des sources S1, S2, S3 et S4 est par exemple adaptée à produire un faisceau de forme générale conique. Chacune des sources S1, S2, S3 et S4 comprend par exemple une antenne cornet. A titre d'exemple, l'axe central de chacune des sources S1, S2, S3 et S4 est sensiblement orthogonal au plan moyen du réseau 203. L'axe central de chacune des sources S1, S2, S3 et S4 passe par exemple sensiblement par le centre de la portion 203₁, 203₂, 203₃ ou 203₄ de réseau associée à la source. A titre d'exemple, dans le plan de la face 203a du réseau, le diamètre du faisceau généré par chacune des sources S1, S2, S3 et S4 correspond sensiblement à la plus grande dimension de la portion 203₁, 203₂, 203₃ ou 203₄ de réseau associée à la source. En pratique, le positionnement précis de chacune des sources S1, S2, S3 et S4, et le dimensionnement des faisceaux émis par les sources peuvent être ajustés de manière à optimiser le diagramme de rayonnement global de l'antenne.

Le réseau 203 et les sources S1, S2, S3 et S4 sont des éléments réciproques, c'est-à-dire qu'ils se comportent sensiblement de la même manière en émission et en réception.

Le fonctionnement de l'antenne des figures 3A et 3B va maintenant être décrit. Dans cette antenne, les fonctions de génération simultanée des faisceaux somme Σ et différence Δ et Δ', et de commande de la direction de pointage de l'antenne (c'est-à-dire la direction dans laquelle le faisceau somme Σ présente une intensité maximale et dans laquelle les faisceaux différence Δ et Δ' présentent un minimum d'intensité), sont mises en oeuvre comme suit.

La fonction de génération du faisceau somme Σ et de contrôle de la direction de pointage est réalisée par le réseau transmetteur 203. Pour cela, le réseau 203 peut être piloté à la manière d'un réseau transmetteur classique. Plus particulièrement, le réseau 203 est commandé de façon à combiner les quatre faisceaux générés par les sources S1, S2, S3 et S4 pour générer le faisceau somme Σ, et, le cas échéant, à modifier dynamiquement la direction centrale dΣ du faisceau somme Σ pour réaliser un balayage électronique ou pour suivre la position d'un objet cible. Les méthodes de détermination des valeurs de déphasage φ à appliquer aux différentes cellules élémentaires 205 du réseau 203 pour générer le faisceau somme Σ selon une direction dΣ donnée n'ont pas été détaillées, les méthodes usuelles de contrôle d'un réseau transmetteur reconfigurable pouvant être utilisées pour réaliser cette fonction.

La fonction de génération, simultanément au faisceau somme Σ, des faisceaux différence Δ et Δ', est réalisée au moyen d'un circuit de traitement 207 adapté à réaliser des recombinaisons des signaux reçus par les sources S1, S2, S3 et S4. Par souci de simplification, on désignera ci-après par les mêmes références S1, S2, S3 et S4 que les sources elles-mêmes les signaux fournis par les sources S1, S2, S3 et S4 respectivement. Plus particulièrement, le circuit de traitement 207 est adapté à fournir :
- sur une première voie de sortie, un premier signal SΣ représentatif de la somme S1+S2+S3+S4 des signaux de sortie des sources S1, S2, S3 et S4 ;
- sur une deuxième voie de sortie, un deuxième signal SΔ représentatif de la combinaison S1+S2-S3-S4 des signaux de sortie des sources S1, S2, S3 et S4 ; et
- sur une troisième voie de sortie, un troisième signal SΔ' représentatif de la combinaison S1-S2-S3+S4 des signaux de sortie des sources S1, S2, S3 et S4.

Lors d'une phase d'émission, les sources S1, S2, S3 et S4 sont commandées pour émettre simultanément un faisceau pendant une période de durée prédéterminée, de façon que l'antenne émette uniquement le faisceau somme Σ, sous la forme d'une impulsion unique.

Lors d'une phase de réception postérieure à la phase d'émission, les signaux SΣ, SΔ et SΔ' fournis par le circuit de traitement 207 sont analysés. Le signal SΣ est représentatif du faisceau somme Σ. Le signal SΔ est représentatif d'un premier faisceau différence Δ dans le plan azimutal, dont la majeure partie de la puissance est répartie dans deux lobes principaux distincts, centrés respectivement selon des directions dΔ+ et dΔ-(non visibles sur les figures 3A et 3B), les directions dΔ+, dΔ- et dΣ étant coplanaires, les directions dΔ+ et dΔ- étant sensiblement symétriques par rapport à la direction dΣ, et le deuxième faisceau Δ ayant une puissance nulle ou peu significative dans la direction dΣ. Le signal SΔ' est représentatif d'un deuxième faisceau différence Δ' dans le plan d'élévation, dont la majeure partie de la puissance est répartie dans deux lobes principaux distincts, centrés respectivement selon des directions dΔ'+ et dΔ'- (non visibles sur les figures 3A et 3B), les directions dΔ'+, dΔ'- et dΣ étant coplanaires, les directions dΔ'+ et dΔ'- étant sensiblement symétriques par rapport à la direction dΣ, le troisième faisceau Δ' ayant une puissance nulle ou peu significative dans la direction dΣ, et le plan comportant les directions dΔ'+, dΔ'- et dΣ étant sensiblement orthogonal au plan comportant les directions dΔ+, dΔ- et dΣ.

La comparaison des signaux de sortie SΣ, SΔ et SΔ' permet d'obtenir une information représentative de l'erreur d'alignement entre la direction centrale d'émission dΣ ou direction de pointage de l'antenne et la position d'un objet cible renvoyant un écho en direction de l'antenne, et ce dans les trois dimensions de l'espace.

Ainsi, l'antenne décrite en relation avec les figures 3A et 3B est adaptée à un système radar mono-impulsion, et a pour avantage d'être commandable électroniquement pour modifier sa direction de pointage sans élément mécanique motorisé.

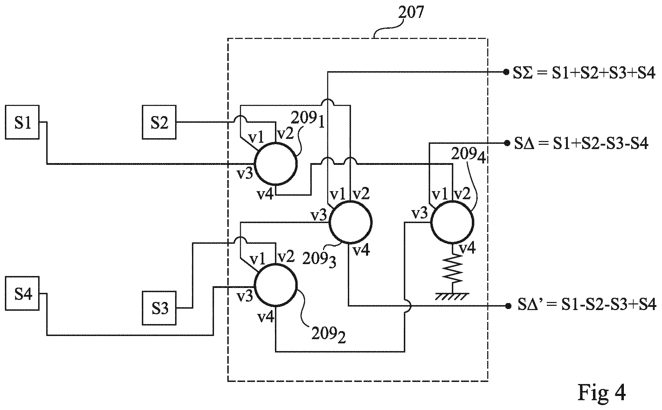

La figure 4 représente plus en détail un exemple de réalisation du circuit de traitement 207 de l'antenne des figures 3A et 3B. Dans cet exemple, le circuit 207 comprend quatre coupleurs hybrides à 180 degrés, par exemple des coupleurs en anneau, désignés respectivement par les références 209₁, 209₂, 209₃ et, 209₄. Chaque coupleur hybride 209₁, 209₂, 209₃, 209₄ comporte quatre voies d'entrée/sortie v1, v2, v3 et v4. Un signal entrant par la voie v1 est divisé en deux signaux d'intensités sensiblement égales sans différence de phase relative transmis vers les voies v2 et v3. La voie v4 ne reçoit quant à elle rien de ce signal entrant. Lorsque des signaux entrent par les voies v2 et v3, la voie v1 fournit un signal égal à la somme de ces signaux, et la voie v4 fournit un signal égal à la différence de ces signaux. Dans l'exemple de la figure 4, le coupleur 209₁ a ses voies v2 et v3 connectées respectivement aux sources S2 et S1, et le coupleur 209₂ a ses voies v2 et v3 connectées respectivement aux sources S3 et S4. Le coupleur 209₃ a ses voies v2 et v3 connectées respectivement à la voie v1 du coupleur 209₁ et à la voie v1 du coupleur 209₂. Le coupleur 209₄ a ses voies v2 et v3 connectées respectivement à la voie v4 du coupleur 209₁ et à la voie v4 du coupleur 209₂. La voie v1 du coupleur 209₃ est connectée à la voie de fourniture du signal SΣ. La voie v4 du coupleur 209₃ est connectée à la voie de fourniture du signal SΔ'. La voie v1 du coupleur 209₄ est connectée à la voie de fourniture du signal SΔ. La voie v4 du coupleur 209₄ est connectée à la masse par l'intermédiaire d'une résistance de terminaison.

Ainsi, le signal SΣ est égal à la somme S1+S2+S3+S4 des signaux de sortie des sources S1, S2, S3 et S4, le signal SΔ est égal à la combinaison S1+S2-S3-S4 des signaux de sortie des sources S1, S2, S3 et S4, et le signal SΔ' est égal à la combinaison S1-S2-S3+S4 des signaux de sortie des sources S1, S2, S3 et S4.

Lors de la phase d'émission, l'impulsion à émettre peut être appliquée sur le noeud de fourniture du signal SΣ. De cette manière, le signal transmis est divisé en quatre signaux d'intensité sensiblement égales, sans différence de phase relative, ces quatre signaux étant transmis respectivement aux sources S1, S2, S3, S4.

Les modes de réalisation décrits ne se limitent pas à l'exemple de circuit de traitement 207 décrit en relation avec la figure 4. Plus généralement, tout autre circuit adapté à réaliser les combinaisons recherchées peut être utilisé, par exemple un circuit RF, un circuit analogique, ou un circuit numérique. En particulier, le circuit 207 peut comporter un circuit de conversion adapté à fournir des signaux numériques représentatifs des signaux de sortie des sources S1, S2, S3 et S4, et une unité de calcul adaptée à réaliser, dans le domaine numérique, les combinaisons recherchées pour obtenir les signaux SΣ, SΔ et SΔ'.

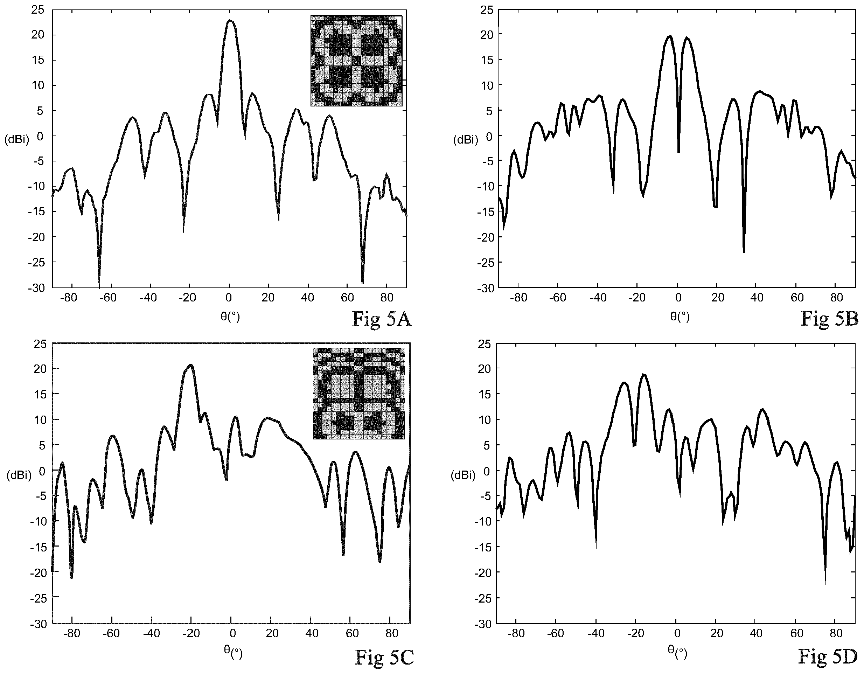

Les figures 5A, 5B, 5C, 5D sont des diagrammes illustrant le comportement de l'antenne décrite en relation avec les figures 3A, 3B et 4. Les diagrammes des figures 5A et 5B représentent respectivement les diagrammes de rayonnement (gain dBi en ordonnée en fonction de l'angle θ par rapport au centre de symétrie de l'antenne en abscisse) du faisceau somme Σ et du faisceau différence Δ' dans le plan d'élévation, pour une direction de pointage de l'ordre de 0° dans le plan d'élévation. On observe bien sur ces diagrammes que le faisceau somme Σ présente un maximum d'intensité dans la direction de pointage de l'antenne, et que le faisceau différence Δ' présente un minimum d'intensité dans la direction de pointage et deux maximums d'intensité situés de part et d'autre de la direction de pointage. Les diagrammes des figures 5C et 5D représentent respectivement les diagrammes de rayonnement du faisceau somme Σ et du faisceau différence Δ' dans le plan d'élévation, pour une direction de pointage de l'ordre de -20° dans le plan d'élévation. Là encore, on observe que le faisceau somme Σ présente un maximum d'intensité dans la direction de pointage de l'antenne, et que le faisceau différence Δ' présente un minimum d'intensité dans la direction de pointage et deux maximums d'intensité situés de part et d'autre de la direction de pointage. Sur chacune des figures 5A et 5C, on a représenté à titre illustratif, dans le coin supérieur droit de la figure, les déphasages appliqués aux différentes cellules élémentaires du réseau transmetteur de l'antenne pour obtenir les faisceaux recherchés. Dans cet exemple, on a considéré un réseau transmetteur carré de 20x20 cellules élémentaires. Les carrés clairs correspondent à des cellules réglées pour générer un déphasage de 180°, et les cellules foncées correspondent à des cellules réglées pour générer un déphasage de 0°.

Des modes de réalisation particuliers ont été décrits. Diverses variantes et modifications apparaîtront à l'homme de l'art. En particulier, les modes de réalisation décrits ne se limitent pas aux exemples de valeurs numériques mentionnés dans la présente description.

Par ailleurs, bien que l'antenne décrite en relation avec les figures 3A, 3B et 4 soit particulièrement adaptée à la mise en oeuvre d'un système radar mono-impulsion, elle peut aussi être utilisée pour d'autres applications. A titre d'exemple, un système radar à commutation séquentielle de faisceau peut être implémenté à l'aide d'une telle antenne, en exploitant uniquement la voie de fourniture du signal SΣ du circuit de traitement 207. A titre de variante, une telle antenne peut être utilisée dans un système de communication radio. En particulier, une telle antenne peut être commandée pour régler l'alignement de son faisceau Σ en direction d'une antenne distante du système.

## Revendications

1. Antenne comportant :
un réseau (203) de cellules élémentaires (205) commandables individuellement, chaque cellule étant adaptée à transmettre un signal radio en introduisant dans ce signal un déphasage (φ) contrôlable choisi parmi au moins deux valeurs discrètes de déphasage ;
du côté d'une première face (203a) du réseau, des première (S1), deuxième (S2), troisième (S3) et quatrième (S4) sources primaires distinctes adaptées à irradier respectivement des premier (203₁), deuxième (203₂), troisième (203₃) et quatrième (203₄) quadrants consécutifs distincts du réseau ; et
un circuit de traitement (207) adapté à fournir un premier signal (SΣ) représentatif de la somme des signaux S1, S2, S3, et S4 fournis respectivement par les première (S1), deuxième (S2), troisième (S3) et quatrième (S4) sources, un deuxième signal de sortie (SΔ) représentatif de la différence S1+S2-S3-S4, et un troisième signal de sortie (SΔ') représentatif de la différence S1-S2-S3+S4.

2. Antenne selon la revendication 1, dans laquelle, dans le plan de la première face (203a) du réseau, le diamètre du faisceau généré par chacune des sources (S1, S2, S3, S4) est sensiblement égal à la plus grande dimension du quadrant de réseau (203₁, 203₂, 203₃, 203₄) associé à la source.

3. Antenne selon la revendication 1 ou 2, dans laquelle chaque source (S1, S2, S3, S4) présente un axe central sensiblement orthogonal au plan moyen du réseau et passant sensiblement par le centre du quadrant du réseau (203₁, 203₂, 203₃, 203₄) associé à la source.

4. Antenne selon l'une quelconque des revendications 1 à 3, dans laquelle les cellules élémentaires (205) du réseau (203) sont disposées en matrice selon des rangées et des colonnes.

5. Antenne selon la revendication 4, dans laquelle la matrice de cellules élémentaires (205) du réseau (203) est une matrice carrée.

6. Antenne selon l'une quelconque des revendications 1 à 5, dans laquelle le réseau (203) comprend 100 à 10000 cellules élémentaires (205).

7. Antenne selon l'une quelconque des revendications 1 à 6, dans laquelle chacune des première (S1), deuxième (S2), troisième (S3) et quatrième (S4) sources primaires comprend une antenne cornet.

8. Antenne selon l'une quelconque des revendications 1 à 7, dans laquelle chacune des cellules élémentaires (205) est une cellule 1-bit adaptée à introduire un déphasage de 0 ou 180° dans le signal transmis.

9. Antenne selon l'une quelconque des revendications 1 à 8, dans laquelle le circuit de traitement (207) comprend des premier (209₁), deuxième (209₂), troisième (209₃) et quatrième (209₄) coupleurs hybrides à 180°, chaque coupleur comportant des première (v1), deuxième (v2), troisième (v3) et quatrième (v4) voies d'entrée/sortie.

10. Antenne selon la revendication 9, dans laquelle :
le premier coupleur (209₁) a ses deuxième (v2) et troisième (v3) voies connectées respectivement aux deuxième (S2) et première (S1) sources, et le deuxième coupleur (209₂) a ses deuxième (v2) et troisième (v3) voies connectées respectivement aux troisième (S3) et quatrième (S4) sources ;
le troisième coupleur (209₃) a ses deuxième (v2) et troisième (v3) voies connectées respectivement à la première voie (v1) du premier coupleur (209₁) et à la première voie (v1) du deuxième coupleur (209₂) ;
le quatrième coupleur (209₄) a ses deuxième (v2) et troisième (v3) voies connectées respectivement à la quatrième voie (v4) du premier coupleur (209₁) et à la quatrième voie (v4) du deuxième coupleur (209₂) ; et
la première voie (v1) du troisième coupleur (209₃) est connectée à une voie de fourniture du premier signal de sortie (SΣ), la quatrième voie (v4) du troisième coupleur (209₃) est connectée à une voie de fourniture du troisième signal de sortie (SΔ'), et la première voie (v1) du quatrième coupleur (209₄) est connectée à une voie de fourniture du deuxième signal de sortie (SΔ) .

11. Antenne selon la revendication 9 ou 10, dans laquelle chacun des premier (209₁), deuxième (209₂), troisième (209₃) et quatrième (209₄) coupleurs est adapté :
à diviser un signal entrant sur sa première voie (v1) en deux signaux d'intensités sensiblement égales transmis, sans changement de phase, vers ses deuxième (v2) et troisième (v3) voies ;
à additionner des signaux reçus sur ses deuxième (v2) et troisième (v3) voies et à transmettre le signal résultant sur sa première voie (v1) ; et
à soustraire des signaux reçus sur ses deuxième (v2) et troisième (v3) voies et à transmettre le signal résultant sur sa quatrième voie (v4).

12. Système radar mono-impulsion comportant une antenne selon l'une quelconque des revendications 1 à 11.

## Patentansprüche

1. Eine Antenne, die Folgendes aufweist:
eine Anordnung (203) von individuell steuerbaren Elementarzellen (205), wobei jede Zelle geeignet ist zum Übertragen eines Funksignals durch Einführen einer steuerbaren Phasenverschiebung (Φ), die aus mindestens zwei diskreten Phasenverschiebungswerten ausgewählt ist, in das Signal;
an der Seite einer ersten Oberfläche (203a) der Anordnung erste (S1), zweite (S2), dritte (S3) und vierte (S4) Primärquellen, die geeignet sind, jeweils erste (203₁), zweite (203₂), dritte (203₃) und vierte (203₄) aufeinanderfolgende Quadranten der Anordnung zu bestrahlen; und
eine Verarbeitungsschaltung (207), die geeignet ist zum Bereitstellen eines ersten Signals (SΣ), das für die Summe des Signals S1, S2, S3 und S4 repräsentativ ist, das jeweils von der ersten (S1), zweiten (S2), dritten (S3) und vierten (S4) Quelle geliefert wird, eines zweiten Ausgangssignals (SΔ), das für die Differenz S1 +S2-S3-S4 repräsentativ ist, und eines dritten Ausgangssignals (SΔ'), das für die Differenz S1-S2-S3+S4 repräsentativ ist.

2. Antenne nach Anspruch 1, wobei in der Ebene der ersten Oberfläche (203a) der Anordnung, der Durchmesser des Strahls, der von jeder der Quellen (S1, S2, S3, S4) erzeugt wird, im Wesentlichen gleich ist zu der größten Dimension des Anordnungsquadraten (203₁, 203₂, 203₃, 203₄), der mit der Quelle assoziiert ist.

3. Antenne nach Anspruch 1 oder 2, wobei jede Quelle (S1, S2, S3, S4) eine Mittelachse aufweist, die im Wesentlichen orthogonal zu der mittleren Ebene der Anordnung ist und im Wesentlichen durch die Mitte des Anordnungsquadranten (203₁, 203₂, 203₃, 203₄), der mit der Quelle assoziiert ist, läuft.

4. Antenne nach einem der Ansprüche 1 bis 3, wobei die Elementarzellen (205) der Anordnung (203) in einer Matrix von Reihen und Spalten angeordnet sind.

5. Antenne nach Anspruch 4, wobei die Matrix der Elementarzellen (205) der Anordnung (203) eine Quadratmatrix ist.

6. Antenne nach einem der Ansprüche 1 bis 5, wobei die Anordnung (203) 100 bis 10 000 Elementarzellen (205) aufweist.

7. Antenne nach einem der Ansprüche 1 bis 6, wobei jede der ersten (S1), zweiten (S2), dritten (S3) und vierten (S4) Primärquellen eine Hornantenne aufweist.

8. Antenne nach einem der Ansprüche 1 bis 7, wobei jede der Elementarzellen (205) eine 1-Bit-Zelle ist, die geeignet ist, eine 0 oder 180° Phasenverschiebung in das übertragene Signal einzuführen.

9. Antenne nach einem der Ansprüche 1 bis 8, wobei die Verarbeitungsschaltung (207) erste (209₁), zweite (209₂), dritte (209₃) und vierte (209₄) 180° Hybridkoppler aufweist, wobei jeder Koppler erste (v1), zweite (v2), dritte (v3) und vierte (v4) Eingangs-/Ausgangspfade aufweist.

10. Antenne nach Anspruch 9, wobei:
der erste Koppler (209₁) seine zweiten (v2) und dritten (v3) Pfade jeweils mit den zweiten (S2) und ersten (S1) Quellen verbunden hat, und der zweite Koppler (209₂) seine zweiten (v2) und dritten (v3) Pfade jeweils mit den dritten (S3) und vierten (S4) Quellen verbunden hat;
der dritte Koppler (209₃) seine zweiten (v2) und dritten (v3) Pfade jeweils mit dem ersten Pfad (v1) des ersten Kopplers (209₁) und dem ersten Pfad (v1) des zweiten Kopplers (209₂) verbunden hat;
der vierte Koppler (2094₄) seine zweiten (v2) und dritten (v3) Pfade jeweils mit dem vierten Pfad (v4) des ersten Kopplers (209₁) und dem vierten Pfad (v4) des zweiten Kopplers (209₂) verbunden hat; und
der erste Pfad (v1) des dritten Kopplers (209₃) mit einem Pfad zum Bereitstellen des ersten Ausgangssignals (SΣ) verbunden hat, der vierte Pfad (v4) des dritten Kopplers (209₃) mit einem Pfad zum Bereitstellen des dritten Ausgangssignals (SΔ') verbunden hat, und der der erste Pfad (v1) des vierten Kopplers (209₄) mit einem Pfad zum Bereitstellen eines zweiten Ausgangssignals (SΔ) verbunden hat.

11. Antenne nach Anspruch 9 oder 10, wobei jeder der ersten (209₁), zweiten (209₂), dritten (209₃) und vierten (209₄) Koppler geeignet ist zum:
Aufteilen eines Signaleingangs an seinem ersten Pfad (v1) in zwei Signale von im Wesentlichen gleicher Intensität, die ohne Phasenänderung, zu seinen zweiten (v2) und dritten (v3) Pfaden übertragen wurden;
Addieren der Signale, die an seinen zweiten (v2) und dritten (v3) Pfaden empfangen werden und Übertragen des sich ergebenden Signals an seinen ersten Pfad (v1); und
Subtrahieren der Signale, die an seinen zweiten (v2) und dritten (v3) Pfaden empfangen werden und Übertragen des sich ergebenden Signals an seinen vierten Pfad (v4).

12. Ein Monopulsradarsystem, das die Antenne nach einem der Ansprüche 1 bis 11 aufweist.

## Claims

1. An antenna comprising:
an array (203) of individually-controllable elementary cells (205), each cell being capable of transmitting a radio signal by introducing into the signal a controllable phase shift (φ) selected from among at least two discrete phase-shift values;
on the side of a first surface (203a) of the array, first (S1), second (S2), third (S3), and fourth (S4) primary sources capable of respectively irradiating first (203₁), second (203₂), third (203₃), and fourth (203₄) consecutive quadrants of the array; and
a processing circuit (207) capable of supplying a first signal (SΣ) representative of the sum of the signals S1, S2, S3, and S4 supplied, respectively, by the first (S1), second (S2), third (S3), and fourth (S4) sources, a second output signal (SΔ) representative of difference S1+S2-S3-S4, and a third output signal (SΔ') representative of difference S1-S2-S3+S4.

2. The antenna of claim 1, wherein, in the plane of the first surface (203a) of the array, the diameter of the beam generated by each of the sources (S1, S2, S3, S4) is substantially equal to the largest dimension of the array quadrant (203₁, 203₂, 203₃, 203₄) associated with the source.

3. The antenna of claim 1 or 2, wherein each source (S1, S2, S3, S4) exhibits a central axis substantially orthogonal to the mean plane of the array and substantially running through the center of the array quadrant (203₁, 203₂, 203₃, 203₄) associated with the source.

4. The antenna of any of claims 1 to 3, wherein the elementary cells (205) of the array (203) are arranged in a matrix of rows and columns.

5. The antenna of claim 4, wherein the matrix of elementary cells (205) of the array (203) is a square matrix.

6. The antenna of any of claims 1 to 5, wherein the array (203) comprises from 100 to 10,000 elementary cells (205).

7. The antenna of any of claims 1 to 6, wherein each of the first (S1), second (S2), third (S3), and fourth (S4) primary sources comprises a horn antenna.

8. The antenna of any of claims 1 to 7, wherein each of the elementary cells (205) is a 1-bit cell capable of introducing a 0 or 180° phase shift in the transmitted signal.

9. The antenna of any of claims 1 to 8, wherein the processing circuit (207) comprises first (209₁), second (209₂), third (209₃), and fourth (209₄) 180° hybrid couplers, each coupler comprising first (v1), second (v2), third (v3), and fourth (v4) input/output paths.

10. The antenna of claim 9, wherein:
the first coupler (209₁) has its second (v2) and third (v3) paths respectively connected to the second (S2) and first (S1) sources, and the second coupler (209₂) has its second (v2) and third (v3) paths respectively connected to the third (S3) and fourth (S4) sources;
the third coupler (209₃) has its second (v2) and third (v3) paths respectively connected to the first path (v1) of the first coupler (209₁) and to the first path (v1) of the second coupler (209₂);
the fourth coupler (209₄) has its second (v2) and third (v3) paths respectively connected to the fourth path (v4) of the first coupler (209₁) and to the fourth path (v4) of the second coupler (209₂); and
the first path (v1) of the third coupler (209₃) is connected to a path for supplying the first output signal (SΣ), the fourth path (v4) of the third coupler (209₃) is connected to a path for supplying the third output signal (SΔ'), and the first path (v1) of the fourth coupler (209₄) is connected to a path for supplying the second output signal (SΔ).

11. The antenna of claim 9 or 10, wherein each of the first (209₁), second (209₂), third (209₃), and fourth (209₄) couplers is capable of:
dividing a signal input on its first path (v1) into two signals of substantially equal intensities transmitted, with no phase change, to its second (v2) and third (v3) paths;
adding signals received on its second (v2) and third (v3) paths and transmitting the resulting signal on its first path (v1); and
subtracting signals received on its second (v2) and third (v3) paths and transmitting the resulting signal on its fourth path (v4).

12. A monopulse radar system comprising the antenna of any of claims 1 to 11.
